# EUROPEAN PATENT SPECIFICATION

(11) **EP 2 165 022 B1**
(45) Date of publication and mention of the grant of the patent: **22.01.2020**
(21) Application number: 08762442.5
(22) Date of filing: 23.06.2008
(51) Int. Cl.: E03C 1/12

(54) **ABLUTIONARY INSTALLATIONS**
ABLUTIONSVORRICHTUNG
INSTALLATIONS POUR ABLUTIONS

(30) Priority: 21.06.2007 GB 0711988
(43) Date of publication of application: 24.03.2010
(73) Proprietor: Kohler Mira Ltd, Cheltenham Gloucestershire GL52 5EP (GB)
(72) Inventor: NICHOLS, John, North Lincolnshire DN18 5SL (GB); BAXTER, Neil, James, Gloucestershire GL52 7WG (GB)
(74) Representative: Barker Brettell LLP
(86) International application number: PCT/GB2008/002129
(87) International publication number: WO 2008/155561

(56) References cited:
- WO-A-2006/045153
- DE-A1- 3 919 544
- GB-A- 2 413 841
- GB-A- 2 416 829

## Description

This invention relates to ablutionary installations employing a heat recovery unit to pre-heat a water supply to the installation by heat exchange with wastewater from the installation according to the preamble of claim 1 as disclosed in GB-A-2413841. The invention has particular, but not exclusive, application to showers, especially electric showers in which a supply of water is heated as it passes through a heater tank containing at least one electric heating element. Electric showers of this type are often referred to as instantaneous showers because the water is heated to a desired temperature on demand at the time of use of the shower.

A problem with electric showers is the poor perceived performance due to low flow rates. Electric showers work by varying the flow of water over one or more electric heating elements contained in a heater tank - the lower the flow rate, the higher the change in temperature - and seasonal fluctuations in the temperature of the mains cold water supply have a significant effect on the flow rates that can be achieved to obtain a desired water temperature.

Thus, during the summer months the temperature of the mains cold water supply may be around 15 to 20°C, or even higher, but can drop to around 5°C or less during the winter months. As a result, to achieve the same outlet water temperature throughout the year, a much lower flow rate is required during the winter months to compensate for the lower temperature of the incoming mains cold water. For example, during the winter months, the user could experience flow rates lower than 3 litres/minute compared to flow rates of up to 11 litres/minute during the summer months.

The flow performance of an electric shower can be improved by increasing the power rating of the heating elements but even here there are limitations on the maximum power rating can be employed. Currently the limit is 10.8 kW and the performance during the winter months is still poor with flow rates less than 4 litres/minute. It has been proposed to improve the performance of an electric shower by using the wastewater from a bath/shower tray to pre-heat the incoming mains cold water supply to the heater tank allowing the electric shower to be operated at higher flow rates. However, pre-heating the cold supply with the wastewater can lead to unstable operation of the electric shower.

Thus, for a given power setting, as the electric shower is operated, the warm waste water increases the temperature of the inlet water to the heater tank which then increases the temperature of the outlet water from the heater tank which means that the waste water temperature is also increased which in turn further increases the temperature of the inlet water to the heater tank and so on. This increase in temperature will continue until an unsafe showering temperature is reached or the user adjusts the setting of the electric shower. However changing the setting of the electric shower will affect the temperature of the inlet water to the heater tank and so on. Furthermore, during summer months when the temperature of the mains cold water supply is higher and higher flow rates are required, problems can arise if a sufficiently high flow rate cannot be obtained to achieve a safe showering temperature.

In our co-pending International patent application No.PCT/GB2007/004686 filed 7 December 2007 we describe a heat recovery unit arranged to receive wastewater from an instantaneous electric shower to pre-heat the cold water supply to the shower that mitigates at least some of the aforementioned problems.

The present invention concerns further improvements in or relating to the ablutionary installations, such as shower systems, described in our aforementioned International patent application. In particular, the present invention seeks to provide an alternative arrangement for recovering heat from the wastewater of an ablutionary installation such as a shower.

According to one aspect of the present invention, there is provided a shower tray, or bath, as defined in claim 1. Optional features are the subject of dependent claims.

As used herein the term shower tray includes baths and other similar fittings for collecting water discharged from a shower.

By employing a built-in heat recovery unit, the shower tray can be installed by connecting the waste outlet from the shower tray to a waste pipe in the conventional manner and inlet/outlet connections provided for connecting the shower tray to the cold water supply and to the electric shower. In this way, installation of the shower tray is facilitated.

By employing one or more drain channels providing a restricted flow of water lower than the flow normally occurring during operation of the shower, the heat recovery chamber fills with water and covers the heat recovery unit during operation of the shower and, when the shower is not in use, water drains from the heat recovery chamber into the outlet chamber from where it is discharged via the outlet to a drain.

The well is covered by a floor panel and the heat recovery unit is located in the well below the floor panel. The floor panel is preferably removable for access to the heat recovery unit without dismantling or removing the shower tray.

The well and floor panel are configured so that water flows into the heat recovery chamber and from the heat recovery chamber to the outlet chamber.

The heat recovery chamber is configured to direct water towards the drain channel (s) in the partition and the outlet chamber is configured to direct water to the outlet.

It may be that the floor panel is supported on the underside to be substantially flush with the surface of the shower tray surrounding the well.

A clearance gap is provided between the marginal edge of the floor panel and the surrounding surface of the shower tray for water to drain into the heat recovery chamber.

It may be that the shower includes a heater tank including at least one electric heating element for heating water flowing through the heater tank from the heat recovery unit, a temperature sensor for monitoring water temperature into and/or out of the heater tank, and means controlling heat input to the cold water in the heater tank to achieve and maintain a selected outlet water temperature substantially constant.

According to another aspect of the invention, there is provided a method of operating an electric shower as defined in claim 10. Optional features are the subject of claim 11.

The heat input to the cold water in the heater tank may be controlled by adjusting the flow rate of the cold water and/or by adjusting the power setting of said at least one heating element. In this way the shower is thermostatically controlled.

According to a still further aspect of the invention, there is provided a shower system as defined in claim 12. Optional features are the subject of claims 13 and 14.

It may be that the well is covered by a removable floor panel providing access to the heat recovery unit from above the shower tray. In this way access to the underside of the shower tray to for cleaning, service, maintenance or repair of the heat recovery unit is not required.

The invention will now be described in more detail by way of example only with reference to the accompanying drawings in which:
**Figure 1** shows a schematic lay-out of an electric shower installation from our co-pending International patent application No.PCT/GB2007/004686;
**Figure 2** shows a schematic lay-out of an electric shower installation;
**Figure 3** is a perspective view of a shower tray embodying the invention;
**Figure 4** is perspective view of the shower tray shown in Figure 3 with the cover removed;
**Figure 5** is perspective view of the shower tray shown in Figure 4 with the heat recovery unit removed;
**Figure 6** is a cross-sectional view of the shower tray shown in Figure 3;
**Figure 7** is a plan view of an alternative shower tray embodying the invention with the floor panel removed;
**Figure 8** is perspective view of the shower tray shown in Figure 7 and the floor panel; and
**Figure 9** is an enlarged view of a corner of the shower tray shown in Figure 7 showing a detail of the filter.

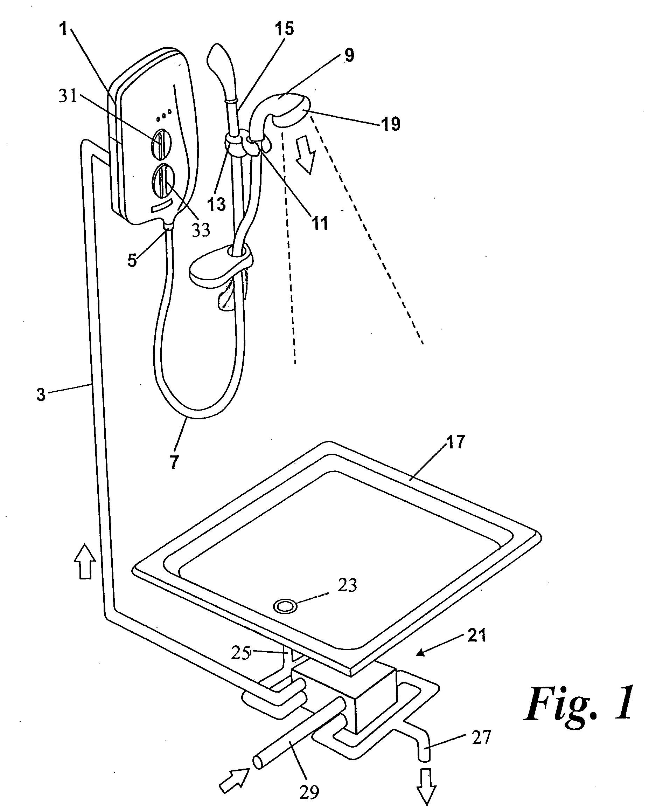

Referring first to Figure 1 of the drawings, an electric shower installation of our co-pending International patent application No.PCT/GB2007/004686 is shown comprising a wall mounted control unit 1 having an inlet (not shown) connected to a water supply pipe 3 and an outlet 5 connected by a flexible hose 7 to a handset 9.

The handset 9 is mounted in a parking socket 11 of a bracket 13 slidably mounted on a wall mounted riser rail 15 to allow the height of the handset 9 above a shower tray 17 to be adjusted. The handset 9 has a spray head 19 for discharging water in a spray according to the layout of nozzles (not shown) in the spray head 19. The spray head may be adjustable to select different combinations and/or types of spray nozzles to vary the spray pattern and/or type.

The water supply to the control unit 1 is pre-heated by heat exchange with wastewater from the shower tray 17 in a separate heat recovery unit 21 positioned under the shower tray 17. The heat recovery unit 21 has a wastewater inlet connected to the outlet 23 from the shower tray by a waste pipe 25 and a wastewater outlet connected to a waste pipe 27 for discharge of wastewater to a drain or the like (not shown). The heat recovery unit also has an inlet connected to a cold water supply pipe 29 and an outlet connected to the supply pipe 3 to the control unit 1. Cold water and wastewater flow through the heat recovery unit 21 in heat exchange relationship with each other whereby the cold water is heated by the wastewater.

The control unit 1 has a rotatable control knob 31 for setting the power input to a heater tank (not shown) connected between the water inlet and water outlet connections of the control unit 1, and a rotatable control knob 33 for selecting the outlet water temperature. A temperature sensor (not shown) is arranged to monitor the outlet water temperature from the heater tank and an electronic control system (not shown) is operable to compare the sensed outlet water temperature with the user selected outlet water temperature and adjust a flow regulator (not shown) to alter the flow rate through the heater tank to maintain substantially constant the user selected outlet water temperature for a given power setting.

In this way, the selected water temperature is maintained even with varying temperature of the inlet water going to the control unit 1 via the heat recovery unit 21. Combining heat recovery to pre-heat the water supply with thermostatic control of the selected water temperature allows the following advantages to be obtained:-
1. Using a lower kW rated thermostatic electric shower to achieve the same performance as a conventional higher kW rated electric shower. This will allow the customer to have reduced electricity bills and the capability to have a shower that performs like a conventional higher kW electric shower even if their electrical supply or consumer unit is not capable of supplying the required current for a conventional higher kW electric shower.
2. Using a high kW rated thermostatic electric shower to achieve a flow rate performance that is unachievable with a conventional high kW electric showers. This will allow the customer to experience a powerful shower even in winter.

The electronic control system may respond to detection of an outlet water temperature higher than a pre-determined value to prevent the user being scalded by discharge of water above a safe showering temperature. The control unit may include a display to provide the user with a visual indication of the water temperature.

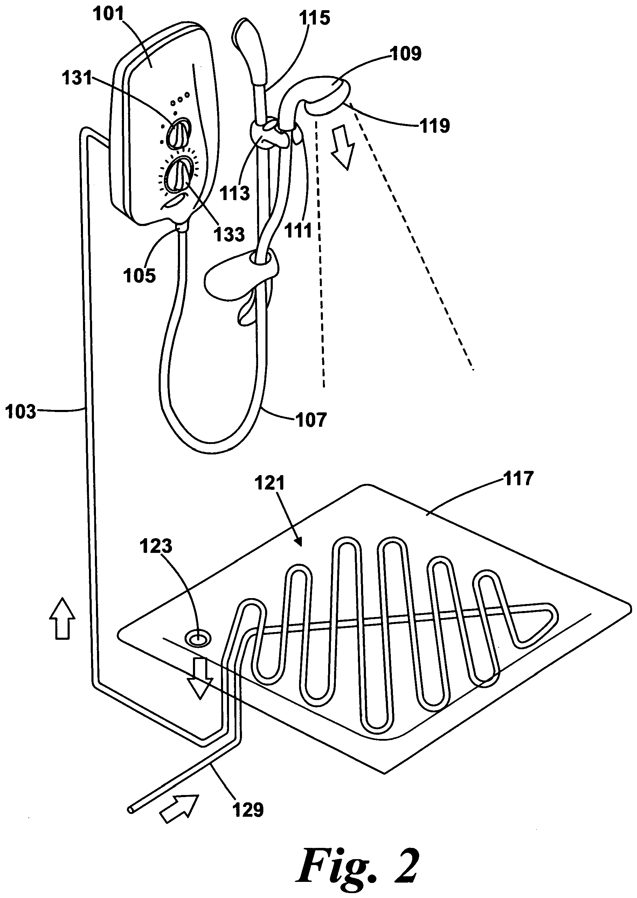

Referring now to Figure 2 of the drawings, there is shown a modification to the electric shower installation shown in Figure 1 in which the heat recovery takes place by heat exchange between the cold water supply and the wastewater within the shower tray before the wastewater is discharged from the shower tray. For convenience, like reference numerals in the series 100 are used to indicate parts corresponding to the embodiment of Figure 1.

In this modified version, the outlet 123 from the shower tray 117 is connected to waste in conventional manner and the only connections required to the heat recovery unit 121 are to connect the incoming cold water supply pipe 129 and the cold water supply pipe 103. In this way, installation of the shower tray 117 with built-in heat recovery unit 121 is facilitated.

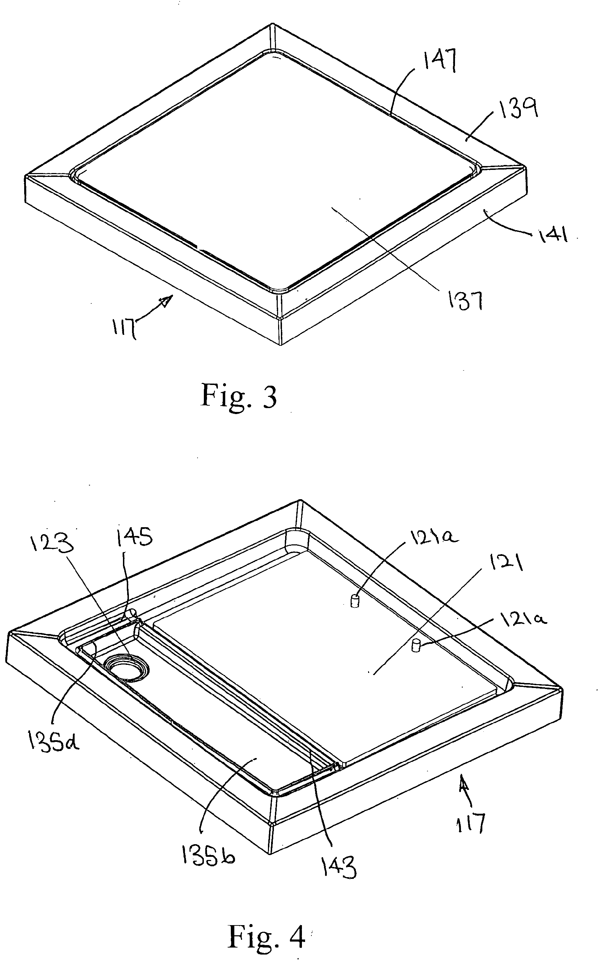

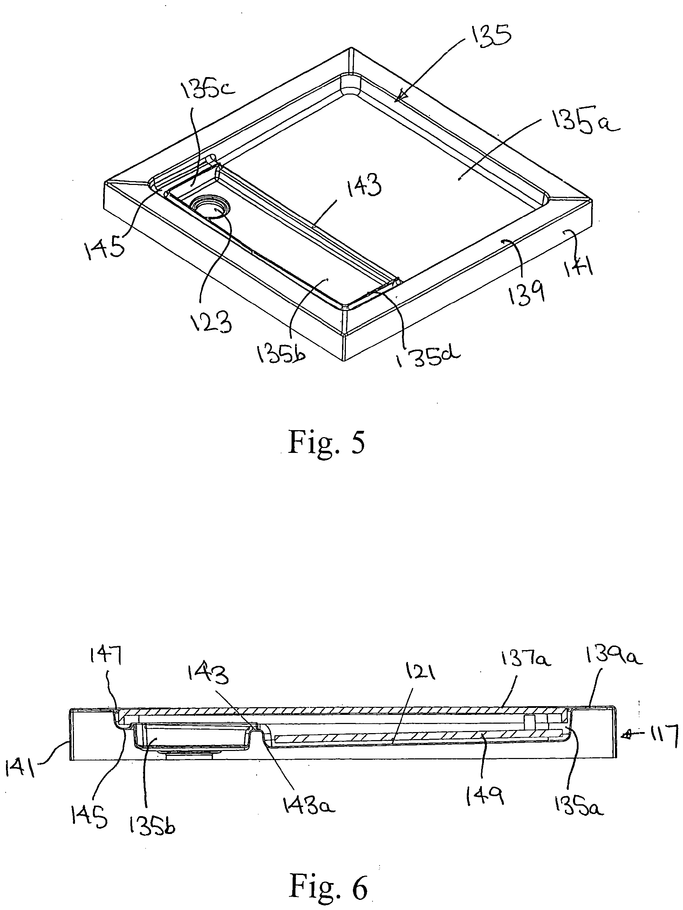

The shower tray 117 with built-in heat recovery unit 121 is shown in more detail in Figures 3 to 6. The shower tray 117 has a well 135 covered by a removable floor panel 137 that is supported on the underside so that an upper surface 137a of the panel 137 is substantially flush with an upper surface 139a of a ledge 139 that surrounds the well 135 and leads to a dependent sidewall 141 slightly deeper than the well 135. In this embodiment, the well 135 and floor panel 137 are of rectangular shape but it will be understood this is not limiting on the scope of the invention and that other shapes may be employed, for example circular, pentagonal.

The well 135 is divided into two chambers 135a,135b by a raised partition 143 that extends transversely of the well 135 between opposed side walls. The partition 143 is formed integrally with the shower tray 117 and in this embodiment forms a wall between the chamber 135a,135b One of the chambers 135a - referred to herein as the heat recovery chamber - is much larger than the other chamber 135b - referred to herein as the outlet chamber. The heat recovery chamber 135a contains the heat recovery unit 121. The outlet chamber 135b is provided with the outlet 123 and the floor of the outlet chamber 135b slopes towards the outlet 123 to ensure that all of the water entering the outlet chamber 135b drains from the shower tray 117.

The outlet chamber 135b is bounded on one side by the partition 143 and on the other three sides by sidewall 135c of the well 135 that terminates at the upper edge in a rolled lip 135d that leads to a channel 145 inset below the upper surface of the ledge 139. The channel 145 is inclined so that water that enters the channel flows towards the ends of the channel 145 that are open to the heat recovery chamber 135a. In this way, wastewater from the shower that is collected in the channel 145 is directed into the heat recovery chamber 135a.

The floor panel 137 is supported at one end by the lip 135d of the sidewall 135c and at the other end by a pair of cylindrical lugs or bosses 121a upstanding from the heat recovery unit 121 positioned within the heat recovery chamber 135a. The floor panel 137 is slightly smaller than the opening bounded by the ledge 139 to leave a clearance gap 147 between the floor panel 137 and the tray 117 around the marginal edge of the floor panel 137.

In use of the shower, water flows through the clearance gap 147 where it passes either directly to the heat recovery chamber 135a or into the channel 145 from where it passes to the heat recovery chamber 135a. In this way, all of the water falling onto the floor panel 137 and ledge 139 of the shower tray drains in to the heat recovery chamber 135a. The upper surface of the floor panel 137 may be slightly dome-shaped and/or provided with channels (not shown) to direct the water to the clearance gap 147 at the edge of the floor panel 137. Alternatively or additionally, the floor panel 137 may have through holes (not shown) in a region that overlies the heat recovery chamber 135a when the floor panel 137 is located over the well 135.

The partition 143 is provided with a plurality of small drain channels 143a (one only shown) at the base of the partition 143 that allow water to flow from the heat recovery chamber 135a to the outlet chamber 135b. The channels 143a are configured to provide a restricted flow of water from the heat recovery chamber 135a to the outlet chamber 135b, for example of the order of one litre per minute, selected to be lower than the minimum flow rate, for example of the order of three litres per minute, that is typically provided in use of the shower. It will be understood that these flow rates are provided by way of example only and are not intended to be limiting on the scope of the invention.

The lower, restricted flow provided by the drain channels 143a ensures that the heat recovery chamber 135a rapidly fills with water when the shower is operating until the water level reaches the top of the partition 143 separating the heat recovery chamber 135a from the outlet chamber 135b whereupon the water flows over the top of the partition 143 into the outlet chamber 135b where it is directed to the outlet 123 for discharge to the drain. In this way, the partition 143 acts like a weir to control flow of water from the heat recovery chamber 135a to the outlet chamber 135b while the shower is operating. As a result, the heat recovery unit 121 located within the heat recovery chamber 135a is totally submerged (covered) by the wastewater to optimize heat transfer between the wastewater and the cold water flowing through the heat recovery unit 121 while the shower is operating.

When the shower is turned off, water in the heat recovery chamber 135a gradually drains into the outlet chamber 135b via the drain channels 143a in the partition 143 and is discharged to waste via the outlet 123. To assist drainage, the floor of the heat recovery chamber 135a is inclined towards the partition 143 and thus directs the water towards the drain channels 143a. As a result, the shower tray does not trap and retain wastewater that could give rise to a health risk when the shower is not in use.

The heat recovery unit 121 may be of any suitable design to maximize heat transfer between the warm wastewater flowing through the heat recovery chamber 135a and the cold water flowing through the heat recovery unit 121. Whatever design is employed, the heat transfer surface area of the heat recovery unit 121 is typically made of a metal or alloy having a high thermal conductivity for heat transfer between the wastewater and the cold water flowing through the unit 121.

In this embodiment, the heat recovery unit 121 comprises a flat rectangular heat exchanger 149 that is sized to be a close fit within the heat recovery chamber 135a and present a large surface area in contact with the wastewater for heat transfer between the wastewater and the cold water flowing through the heat exchanger. In this arrangement, the heat exchanger 149 may have internal partitions to direct the flow of water through the heat exchanger from an inlet connection (not shown) to the incoming cold water supply pipe and an outlet connection (not shown) to the supply pipe 103 to the control unit 101.

In other respects, the operation of the shower to maintain substantially constant a selected shower temperature is similar to the embodiment of Figure 1 and will be understood from the description provided.

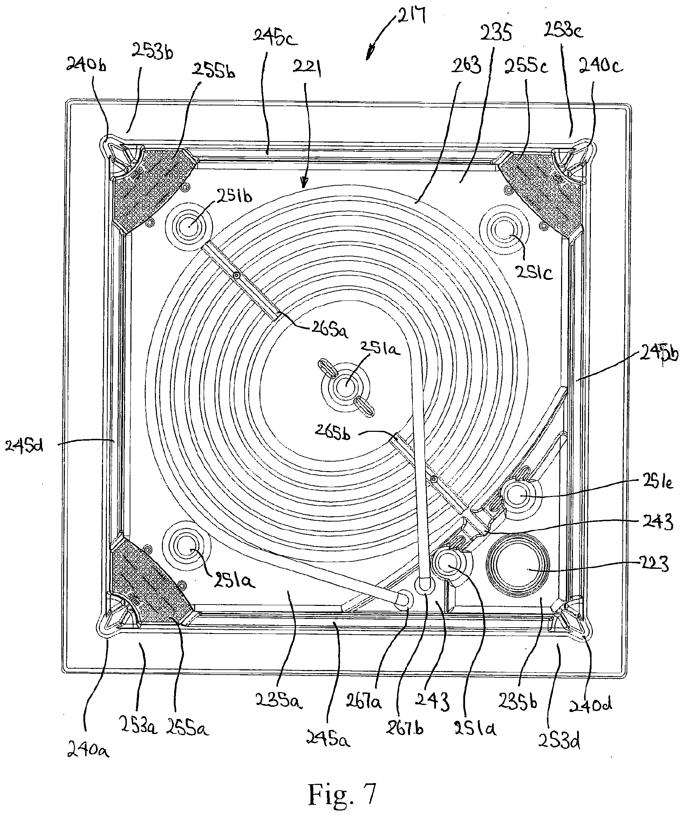

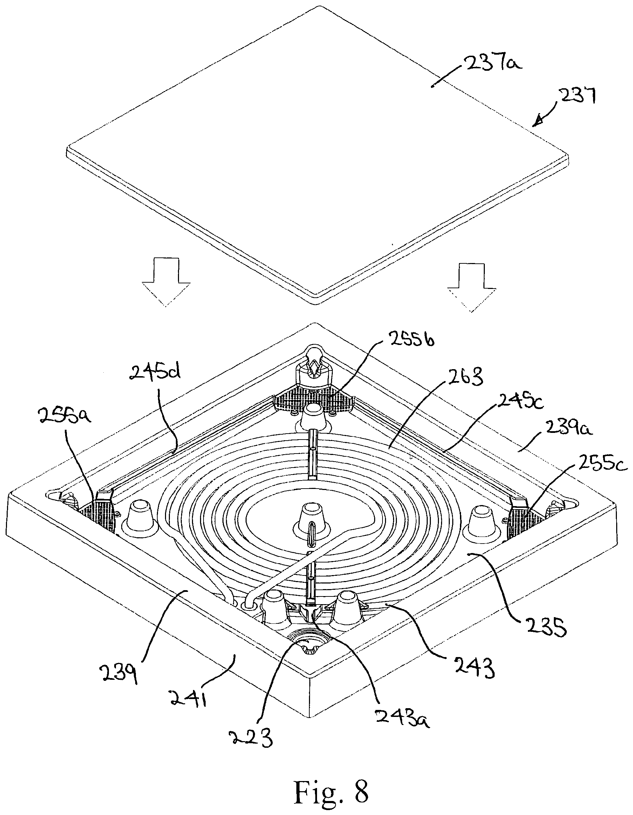

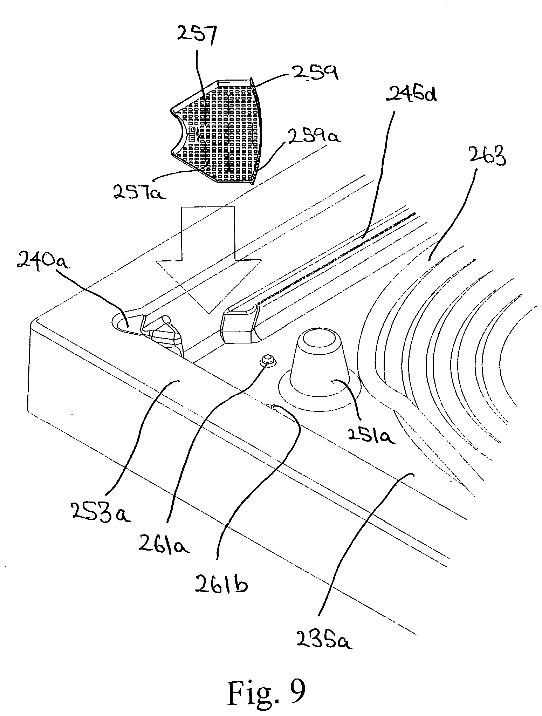

Referring now to Figures 7 to 9 of the drawings, there is shown an alternative shower tray embodying the invention that can be used, for example, in the installation of Figure 2 in place of the shower tray shown in Figures 3 to 6. For convenience, like reference numerals in the series 200 are used to indicate parts corresponding to the embodiment of Figures 3 to 6.

In this embodiment, the shower tray 217 has a well 235 covered by a removable floor panel 237 that is supported on the underside so that an upper surface 237a of the panel 237 is substantially flush with an upper surface 239a of a ledge 239 that surrounds the well 235 and leads to a dependent sidewall 241 slightly deeper than the well 235. In this embodiment, the well 235 and floor panel 237 are of rectangular shape but it will be understood this is not limiting on the scope of the invention and that other shapes may be employed, for example circular, pentagonal.

The floor panel 237 is supported by a plurality of posts that are formed integrally with the shower tray 217 and upstand from the bottom of the well 235. In this embodiment, there is one centrally located post 251a and one corner post 251a,b,c in each of three corners 253a,b,c of the well 235. A pair of corner posts 251d,e are provided in the remaining corner 253d of the well 235 and are incorporated in a partition 243 that extends between the adjacent side walls of the well 235 in the corner 253d of the well 235. Other arrangements of the posts and/or other support means for the floor panel 237 may be employed.

The partition 243 separates an outlet chamber 235b provided with an outlet 223 for connection to waste from a heat recovery chamber 235a provided with a built-in heat recovery unit 221. In this way, the outlet chamber 235b is restricted to a corner region of the well 235 providing a larger space in which to accommodate the heat recovery unit 221 in the heat recovery chamber 235a. As a result, the size and thus surface area of the heat recovery unit 221 available for heat transfer between the incoming cold water supply and the wastewater from the shower can be increased for efficient heat recovery to pre-heat the cold water supply to the shower.

Between the posts 251d,e the partition 243 is provided with a drain channel 243a that allows a restricted flow of water from the heat recovery chamber 235a to the outlet chamber 235b. As described above, the drain channel 243a is selected to provide a flow rate that is lower than the minimum flow rate provided in use of the shower. In this way, the heat recovery chamber 235b fills with water to cover the heat recovery unit 221 when the shower is on and, when the shower is off, the water drains from the heat recovery chamber 235a through the channel 243a into the outlet chamber 235b from where it is discharged through the outlet 223 to waste. As a result, when the shower is off, the well is completely drained of waste water. More than one drain channel may be provided.

In this embodiment, channels 245a,b,c,d are provided along each side of the well 235 at the upper end of the sidewall 235c of the well and inset below the upper surface of the ledge 239. The floor panel 237 is slightly smaller than the opening bounded by the ledge 239 to leave a clearance gap (not shown) between the floor panel 237 and the tray 217 around the marginal edge of the panel 237 through which waste water from the shower can pass into the channels 245a,b,c,d. In addition, the ledge 239 is provided with rebated portions 240a,b,c,d at each corner of the well that permit an increased flow of waste water.

The channels 245a,b meet at the corner 253d of the well provided with the waste outlet 223 and are inclined to direct water towards the corners 253a,c to prevent waste water from the shower flowing directly into the outlet chamber 235b. The channels 245c,d on the remaining two sides of the well are inclined to direct water towards the corners 253b opposite the outlet chamber 235b.

Removable filters 255a,b,c are provided in each of the corners 253a,b,c and filter waste water received from the channels 245a,b,c,d and from the rebated portions 240a,b,c before it enters the heat recovery chamber 235a. The filters 255a,b,c are shaped to fit in the corners of the well and have a base wall 257 surrounded by a side wall 259 that extends above and below the base wall 257 so that the base wall 257 is lifted clear of the base of the well 235.

The base wall 257 is provided with a plurality of apertures 257a and the side wall 259 is provided with a plurality of apertures 259a in the front face of the filter opening to the heat recovery chamber 235a. The apertures 257a, 259a allow waste water directed to the corners 253a,b,c of the well to flow into the heat recovery chamber 235a.

The filters 255a,b,c serve to remove material such as hairs from the waste water and the number and size of the apertures 257a,259a is chosen to provide a flow rate higher than the maximum flow rate provided in use of the shower. In this way, the presence of the filters does not restrict flow of the waste water even if some of the apertures become blocked by collected material.

The filters 255a,b,c are readily accessible by removing the floor panel 237 and can be lifted out of the well 235 for cleaning and then replaced. The filters 255a,b,c are held in place at the corners of the well 235 by a pair of small lugs 261a,b formed integrally with the shower tray 217 against which the front face of the filter seats.

In this embodiment, the heat recovery unit 221 is of annular shape in the form of a flat, spiral coil 263 of metal or alloy tube having a high thermal conductivity, for example copper tube, although other materials including plastics may be employed. The turns of the coil 263 are closely packed and are located and retained in position by a pair of straps 265a,b secured to the base of the well 235. As shown, the diameter of the coil 263 is such that the heat recovery unit 221 occupies substantially the whole area within the corner posts 251b,c,d,e thereby maximizing the surface area available for heat transfer with the waste water. Other coil configurations may be employed, for example a serpentine coil.

At each end of the coil 263 the tube passes through apertures 267a, b in the top of the partition 243 for connection to the incoming cold water supply pipe (not shown) and to the supply pipe (not shown) to the shower control unit by any suitable means, for example quick-fit connectors or any other suitable couplings. The tube may be sealed relative to the apertures 267a,b by any suitable means to prevent leakage, for example O-rings.

In use, the water falling onto the floor panel 237 and ledge 239 of the shower tray 217 and is diverted into the heat recovery chamber 235a by means of the channels 245a,b,c,d and rebated portions 240a,b,c,d at the marginal edge of the floor panel 237. In a modification, the floor panel 237 may have openings, for example holes, through which some of the water can flow through the panel 237 directly into the heat recovery chamber 235a. The floor panel 237 and upper surface of the ledge 239 may be inclined to direct the water from the shower to the marginal edge of the floor panel 237.

The heat recovery chamber 235a fills with water due to the flow restriction created between the heat recovery chamber 235a and the outer chamber 235b by the drain channel 243a in the partition 243. As a result, the water covers the coil 263 of the heat recovery unit 221 and the incoming cold water supply flowing through the coil 263 is heated by heat exchange with warmer waste water from the shower.

The partition 243 acts like a weir and waste water can flow over the top of the partition 243 into the outlet chamber 235b if the level of the waste water in the heat recovery chamber 235a reaches the top of the partition 243. As a result, the risk of waste water overflowing from the shower tray is reduced or eliminated.

The arrangement of the channels 245a,b,c,d and rebated portions 240a,b,c,d directs the water to the corners 253a,b,c of the well that open into the heat recovery chamber 235a at positions spaced apart from each other and from the partition 243. As a result, the water is directed towards the coil 263 on three sides ensuring that there is a flow of water moving over all the available heat exchange surface of the coil 263 towards the outlet chamber 235b when the shower is in use.

In particular, the channels 245c,d on two sides of the well directing water to the corner 253b opposite the partition 243. As a result, approximately 50% of the waste water is delivered to the well at the corner 253b with approximately 25% delivered to each of the corners 253a,c. In this way, around half of the waste water has to flow over the whole of the heat recovery unit 221 to reach the outlet chamber 235b. Other arrangements of the channels may be employed.

In this way, heat transfer from warm waste water from the shower to pre-heat the incoming cold water supply flowing through the coil 263 is optimized for efficient heat recovery. When the shower is not in use, the channel 243a in the partition allows waste water in the heat recovery chamber 235a to drain into the outlet chamber 235b from where it is discharged to waste through the outlet 223.

In other respects, the operation of the shower to maintain substantially constant a selected shower temperature is similar to the embodiment of Figure 1 and will be understood from the description provided.

In the above-described embodiments, the shower tray 117,217 may be made of any suitable materials using any suitable manufacturing techniques but is preferably constructed and made by the method described in our International patent application published under No. WO2005/011455. The floor panel 137,237 may be made of any suitable materials including wood or plastics or a combination of any of these and being removable can lifted to allow access to the well to remove any debris blocking the outlet 123,223 or the drain channels 143a,243a or filters 255a,b,c. Also access to the heat recovery unit 121,221 for cleaning, service or repair is facilitated.

While the embodiments of the invention have been described for pre-heating a cold water supply to a thermostatic electric shower, it will be understood that the invention could be applied to other types of shower installations including non-thermostatic electric showers, thermostatic and non-thermostatic mixing valves for showers, as well as other ablutionary installations including electric or gas water heaters or mixer valves for hand washing, bathing or showering. Moreover, other constructions of heat recovery unit that can be incorporated into the shower tray will be apparent to those skilled in the art and the invention is not limited to the examples provided.

Furthermore, while the embodiments of the invention have been described for a shower tray incorporating a heat recovery unit, it will be understood that the invention could be applied to other ablutionary appliances and fittings such as a bath provided with a well covered by a floor panel.

Other applications and uses of the invention will be apparent to those skilled in the art.

## Claims

1. A shower tray (117;217), or bath, provided with a heat recovery unit (121;221) in a well (135;235) of the shower tray, or bath, for pre-heating a cold water supply (103) to a shower by heat exchange with wastewater from the shower that is collected in the well prior to discharge of the waste water from the shower tray, or bath, wherein the well comprises a heat recovery chamber (135a;235a) in which the heat recovery unit is located and an outlet (123;223) for discharge of waste water from the shower tray, or bath, wherein the well further comprises a partition (143;243) between the heat recovery chamber and the outlet to control a level of wastewater in the heat recovery chamber so that wastewater can fill the heat recovery chamber to a level covering the heat recovery unit when the shower is in use and can drain from the heat recovery chamber when the shower is not in use, and
wherein the shower tray, or bath, is provided with a floor panel (137;237) that covers the well (135;235), and the heat recovery unit (121;221) is located in the heat recovery chamber (135a;235a) below the floor panel,
**characterised in that**
the well and floor panel are configured so that water flows into the heat recovery chamber via a clearance gap (147) provided between the marginal edge of the floor panel and the surrounding surface of the shower tray, or bath, and **in that** the partition (143; 243) is provided with one or more drain channels (143a; 243a) providing a restricted flow of water lower that the flow normally occurring during operation of the shower so that the heat recovery chamber fills with wastewater to the level controlled by the partition during operation of the shower, and is drained when the shower is not in use.

2. The shower tray (117; 217), or bath, according to claim 1, wherein the partition (143; 243) acts as a weir to control the level of wastewater in the heat recovery chamber to cover the heat recovery unit during operation of the shower.

3. The shower tray (117; 217), or bath, according to claim 1 or claim 2, wherein the heat recovery chamber is configured to direct water towards the drain channels in the partition.

4. The shower tray (117; 217), or bath, according to any preceding claim, wherein the floor panel is removable for access to the heat recovery unit without dismantling or removing the shower tray, or bath, and is supported on the underside to be substantially flush with the upper surface of the shower tray, or bath.

5. The shower tray (117; 217), or bath, according to any preceding claim, wherein the clearance gap opens to a channel (145; 245) that diverts waste water away from the outlet to the heat recovery chamber.

6. The shower tray (117; 217), or bath, according to any preceding claim, wherein the well is configured to direct waste water into the heat recovery chamber at positions spaced apart around the heat recovery chamber.

7. The shower tray (117; 217), or bath, according to any preceding claim, wherein a filter (255a, b, c, d) is provided to filter water flowing into the heat recovery chamber, and the filter is preferably removable.

8. The shower tray (117; 217), or bath, according to any preceding claim, wherein the heat recovery unit comprises a spiral coil (263).

9. The shower tray (117; 217), or bath, according to any preceding claim, wherein the outlet is provided in an outlet chamber (135b) separated from the heat recovery unit by the partition.

10. A method of operating an electric shower (101) comprising the steps of providing a supply of cold water (103) to a heater tank containing at least one electric heating element for heating the water, supplying heated water from the heater tank to a shower outlet (109), collecting water discharged from the shower outlet in a well (135; 235) of a shower tray (117; 217), or bath, providing a heat recovery unit (121; 221) in a heat recovery chamber (135a; 235a) of the well, passing the cold water supply through the heat recovery unit in heat exchange relationship with the water collected in the heat recovery chamber to pre-heat the cold water supply to the heater tank, and providing a partition (143; 243) separating the heat recovery chamber from an outlet (123; 223) of the well, and providing the partition with one or more drain channels (143a; 243a) providing a restricted flow of water lower than the flow normally occurring during operation of the shower so that the heat recovery chamber fills with wastewater to the level controlled by the partition during operation of the shower, and is drained when the shower is not in use, providing a temperature sensor for monitoring water temperature into and/or out of the heater tank, and controlling heat input to the cold water in the heater tank to achieve and maintain a selected outlet water temperature substantially constant, and providing the shower tray, or bath, with a floor panel (137; 237) to cover the well (135; 235), and locating the heat recovery unit (121; 221) in the heat recovery chamber (135a; 235a) below the floor panel, and providing a clearance gap (147) between the marginal edge of the floor panel and the surrounding surface of the shower tray, or bath, so that water drains into the heat recovery chamber.

11. The method according to claim 10, including the step of controlling the heat input to the cold water in the heater tank by adjusting the flow rate of the cold water and/or by adjusting the power setting of said at least one heating element.

12. A shower system comprising an electric shower (101) and a shower tray (117; 217), or bath, according to any one of claims 1 to 9.

13. The shower system according to claim 12, wherein the shower is thermostatically controlled to maintain a selected outlet water temperature substantially constant.

14. The shower system according to claim 13, wherein the shower includes a heater tank including at least one electric heating element for heating water flowing through the heater tank from the heat recovery unit, a temperature sensor for monitoring water temperature into and/or out of the heater tank, and means controlling heat input to the cold water in the heater tank to achieve and maintain the selected outlet water temperature substantially constant.

## Patentansprüche

1. Duschwanne (117; 217) oder Badewanne, die mit einer Wärmerückgewinnungseinheit (121; 221) in einem Schacht (135; 235) der Duschwanne oder der Badewanne zum Vorheizen einer Kaltwasserzufuhr (103) zu einer Dusche durch Wärmeaustausch mit Abwasser aus der Dusche, das in dem Schacht vor dem Entleeren des Abwassers aus der Duschwanne oder der Badewanne gesammelt wird, versehen ist, wobei der Schacht eine Wärmerückgewinnungskammer (135a; 235a), in der die Wärmerückgewinnungseinheit angeordnet ist, und einen Auslass (123; 223) zum Entleeren von Abwasser aus der Duschwanne oder der Badewanne aufweist, wobei der Schacht ferner eine Trennwand (143; 243) zwischen der Wärmerückgewinnungskammer und dem Auslass aufweist, um den Pegel des Abwassers in der Wärmerückgewinnungskammer zu steuern, so dass das Abwasser die Wärmerückgewinnungskammer bis zu einem Pegel füllen kann, der die Wärmerückgewinnungseinheit bedeckt, wenn die Dusche verwendet wird, und die Wärmerückgewinnungskammer entleeren kann, wenn die Dusche nicht verwendet wird, und
wobei die Duschwanne oder Badewanne mit einer Bodenplatte (137; 237) versehen ist, die den Schacht (135; 235) bedeckt, und sich die Wärmerückgewinnungseinheit (121; 221) in der Wärmerückgewinnungskammer (135a; 235a) unter der Bodenplatte befindet,
**dadurch gekennzeichnet, dass**
der Schacht und die Bodenplatte so konfiguriert sind, dass Wasser in die Wärmerückgewinnungskammer über einen Zwischenraum (147) fließt, der zwischen der Randkante der Bodenplatte und der umgebenden Oberfläche der Duschwanne oder der Badewanne vorgesehen ist, und dass die Trennwand (143; 243) mit einem oder mehreren Abflusskanälen (143a; 243a) versehen ist, die einen begrenzten Fluss von Wasser bereitstellen, der geringer ist als der normalerweise während des Betriebs der Dusche auftretende Fluss, so dass sich die Wärmerückgewinnungskammer mit Abwasser auf den Pegel füllt, der von der Trennwand während des Betriebs der Dusche gesteuert wird, und wird entleert, wenn die Dusche nicht verwendet wird.

2. Duschwanne (117; 217) oder Badewanne nach Anspruch 1, wobei die Trennwand (143; 243) als ein Wehr wirkt, um den Pegel des Abwassers in der Wärmerückgewinnungskammer zu steuern, um die Wärmerückgewinnungseinheit während des Betriebs von der Dusche abzudecken.

3. Duschwanne (117; 217) oder Badewanne nach Anspruch 1 oder Anspruch 2, wobei die Wärmerückgewinnungskammer konfiguriert ist, um Wasser zu den Abflusskanälen in der Trennwand zu leiten.

4. Duschwanne (117; 217) oder Badewanne nach einem der vorstehenden Ansprüche, wobei die Bodenplatte für den Zugang zu der Wärmerückgewinnungseinheit entfernbar ist, ohne die Duschwanne oder Badewanne auseinanderzunehmen oder zu entfernen, und an der Unterseite abgestützt ist, um im Wesentlichen bündig mit der oberen Außenfläche der Duschwanne oder der Badewanne zu sein.

5. Duschwanne (117; 217) oder Badewanne nach einem der vorstehenden Ansprüche, wobei der Zwischenraum zu einem Kanal (145; 245) hin geöffnet ist, der Abwasser von dem Auslass zu der Wärmerückgewinnungskammer umleitet.

6. Duschwanne (117; 217) oder Badewanne nach einem der vorstehenden Ansprüche, wobei der Schacht so konfiguriert ist, dass Abwasser an Positionen, die um die Wärmerückgewinnungskammer herum beabstandet sind, in die Wärmerückgewinnungskammer geleitet wird.

7. Duschwanne (117; 217) oder Badewanne nach einem der vorstehenden Ansprüche, wobei ein Filter (255a, b, c, d) vorgesehen ist, um in die Wärmerückgewinnungskammer strömendes Wasser zu filtern, und wobei der Filter vorzugsweise entfernbar ist.

8. Duschwanne (117; 217) oder Badewanne nach einem der vorstehenden Ansprüche, wobei die Wärmerückgewinnungseinheit eine Spiralspule (263) aufweist.

9. Duschwanne (117; 217) oder Badewanne nach einem der vorstehenden Ansprüche, wobei der Auslass in einer Auslasskammer (135b) vorgesehen ist, die von der Wärmerückgewinnungseinheit durch die Trennwand getrennt ist.

10. Verfahren zum Betreiben einer elektrischen Dusche (101), umfassend die Schritte des Bereitstellens einer Zufuhr von kaltem Wasser (103) zu einem Heiztank, der mindestens ein elektrisches Heizelement zum Heizen des Wassers enthält, und des Zuführens von erwärmtem Wasser von dem Heiztank zu einem Duschauslass (109), des Sammelns des Wassers, das aus dem Duschauslass in einen Schacht (135; 235) einer Duschwanne (117; 217) oder einer Badewanne entleert wird, und des Bereitstellens einer Wärmerückgewinnungseinheit (121; 221) in einer Wärmerückgewinnungskammer (135a; 235a) des Schachts, des Leitens der Kaltwasserzufuhr durch die Wärmerückgewinnungseinheit in Wärmeaustauschbeziehung mit dem in der Wärmerückgewinnungskammer gesammelten Wasser, um die Kaltwasserzufuhr zu dem Heiztank vorzuwärmen, und Bereitstellen einer Trennwand (143; 243), die die Wärmerückgewinnungskammer von einem Auslass (123; 223) des Schachts trennt, und des Versehens der Trennwand mit einem oder mehreren Abflusskanälen (143a; 243a), die einen eingeschränkten Fluss von Wasser bereitstellen, der niedriger als der Fluss ist, der normalerweise während des Betriebs von der Dusche auftritt, so dass die Wärmerückgewinnungskammer sich während des Betriebs von der Dusche mit Abwasser bis zu dem von der Trennwand gesteuerten Pegel füllt, und sich entleert, wenn die Dusche nicht verwendet wird, des Bereitstellens eines Temperatursensors zur Überwachung der Temperatur des Wassers zu und / oder aus dem Heiztank und zum Steuern des Wärmeeintrags zu dem kalten Wasser in dem Heizungsbehälter, um eine ausgewählte Temperatur des Abwassers zu erreichen und im Wesentlichen konstant zu halten, und des Versehens der Duschwanne oder Badwanne mit einer Bodenplatte (137; 237) zum Abdecken des Schachts (135; 235) und Anordnen der Wärmerückgewinnungseinheit (121; 221) in der Wärmerückgewinnungskammer (135a; 235a) unter der Bodenplatte und des Vorsehens eines Zwischenraums (147) zwischen der Randkante der Bodenplatte und der umgebenden Oberfläche der Duschwanne oder Badewanne, so dass sich das Wasser in die Wärmerückgewinnungskammer entleert.

11. Verfahren nach Anspruch 10, einschließend den Schritt des Steuerns des Wärmeeintrags in das kalte Wasser in dem Heiztank durch Anpassen der Durchflussrate des kalten Wassers und / oder durch Anpassen der Leistungseinstellung des mindestens einen Heizelements.

12. Duschsystem, umfassend eine elektrische Dusche (101) und eine Duschwanne (117; 217) oder eine Badewanne nach einem der Ansprüche 1 bis 9.

13. Duschsystem nach Anspruch 12, wobei die Dusche thermostatisch gesteuert wird, um eine ausgewählte Auslasswassertemperatur im Wesentlichen konstant zu halten.

14. Duschsystem nach Anspruch 13, wobei die Dusche einen Heiztank, der mindestens ein elektrisches Heizelement zum Heizen von Wasser , das von der Wärmerückgewinnungseinheit durch den Heiztank fließt, und einen Temperatursensor zum Überwachen der Wassertemperatur in und / oder aus dem Heiztank und Mittel zum Steuern des Wärmeeintrags in das kalte Wasser in dem Heiztank einschließt, um die ausgewählte Auslasswassertemperatur zu erreichen und im Wesentlichen konstant zu halten.

## Revendications

1. Receveur de douche (117 ; 217), ou baignoire, pourvu(e) d'une unité de récupération de chaleur (121 ; 221) dans un puisard (135 ; 235) du receveur de douche, ou de la baignoire, pour préchauffer un approvisionnement d'eau froide (103) à une douche par échange de chaleur avec des eaux usées provenant de la douche qui sont recueillies dans le puisard avant l'évacuation des eaux usées du receveur de douche, ou de la baignoire, dans lequel le puisard comprend une chambre de récupération de chaleur (135a ; 235a) dans laquelle l'unité de récupération de chaleur est située et un orifice de sortie (123 ; 223) pour l'évacuation des eaux usées du receveur de douche, ou de la baignoire, dans lequel le puisard comprend en outre une cloison (143 ; 243) entre la chambre de récupération de chaleur et l'orifice de sortie pour réguler un niveau d'eaux usées dans la chambre de récupération de chaleur de sorte que les eaux usées puissent remplir la chambre de récupération de chaleur jusqu'à un niveau couvrant l'unité de récupération de chaleur lorsque la douche est en utilisation et puisse se vidanger de la chambre de récupération de chaleur lorsque la douche n'est pas en utilisation, et
dans lequel le receveur de douche, ou la baignoire, est pourvu(e) d'un panneau de sol (137 ; 237) qui couvre le puisard (135 ; 235), et l'unité de récupération de chaleur (121 ; 221) est située dans la chambre de récupération de chaleur (135a ; 235a) en dessous du panneau de sol,
**caractérisé(e) en ce que** le puisard et le panneau de sol sont configurés de sorte que l'eau s'écoule dans la chambre de récupération de chaleur via un trou de dégagement (147) prévu entre le bord marginal du panneau de sol et la surface environnante du receveur de douche, ou de la baignoire, et en ce que la cloison (143 ; 243) est pourvue d'un ou de plusieurs canaux de vidange (143a ; 243a) fournissant un écoulement d'eau limité inférieur à l'écoulement se produisant normalement pendant un fonctionnement de la douche de sorte que la chambre de récupération de chaleur se remplisse d'eaux usées jusqu'au niveau régulé par la cloison pendant un fonctionnement de la douche, et soit vidangée lorsque la douche n'est pas en utilisation.

2. Receveur de douche (117 ; 217), ou baignoire, selon la revendication 1, dans lequel/laquelle la cloison (143 ; 243) sert de déversoir pour réguler le niveau d'eaux usées dans la chambre de récupération de chaleur pour couvrir l'unité de récupération de chaleur pendant un fonctionnement de la douche.

3. Receveur de douche (117 ; 217), ou baignoire, selon la revendication 1 ou la revendication 2, dans lequel/laquelle la chambre de récupération de chaleur est configurée pour diriger l'eau vers les canaux de vidange dans la cloison.

4. Receveur de douche (117 ; 217), ou baignoire, selon l'une quelconque des revendications précédentes, dans lequel/laquelle le panneau de sol est amovible pour accéder à l'unité de récupération de chaleur sans démonter ou enlever le receveur de douche, ou la baignoire, et est supporté sur la face inférieure pour être sensiblement à fleur avec la surface supérieure du receveur de douche, ou de la baignoire.

5. Receveur de douche (117 ; 217), ou baignoire, selon l'une quelconque des revendications précédentes, dans lequel/laquelle le trou de dégagement s'ouvre sur un canal (145 ; 245) qui dévie les eaux usées de l'orifice de sortie jusqu'à la chambre de récupération de chaleur.

6. Receveur de douche (117 ; 217), ou baignoire, selon l'une quelconque des revendications précédentes, dans lequel/laquelle le puisard est configuré pour diriger les eaux usées dans la chambre de récupération de chaleur à des positions espacées autour de la chambre de récupération de chaleur.

7. Receveur de douche (117 ; 217), ou baignoire, selon l'une quelconque des revendications précédentes, dans lequel/laquelle un filtre (255a, b, c, d) est prévu pour filtrer l'eau s'écoulant dans la chambre de récupération de chaleur, et le filtre est de préférence amovible.

8. Receveur de douche (117 ; 217), ou baignoire, selon l'une quelconque des revendications précédentes, dans lequel/laquelle l'unité de récupération de chaleur comprend un serpentin en spirale (263).

9. Receveur de douche (117 ; 217), ou baignoire, selon l'une quelconque des revendications précédentes, dans lequel/laquelle l'orifice de sortie est prévu dans une chambre de sortie (135b) séparé de l'unité de récupération de chaleur par la cloison.

10. Procédé de fonctionnement d'une douche électrique (101) comprenant les étapes de fourniture d'un approvisionnement d'eau froide (103) à un chauffe-eau contenant au moins un élément chauffant électrique pour chauffer l'eau, d'approvisionnement d'eau chauffée provenant du chauffe-eau à un orifice de sortie de douche (109), de recueil d'eau évacuée depuis l'orifice de sortie de douche dans un puisard (135 ; 235) d'un receveur de douche (117 ; 217), ou d'une baignoire, de fourniture d'une unité de récupération de chaleur (121; 221) dans une chambre de récupération de chaleur (135a ; 235a) du puisard, de passage de l'approvisionnement d'eau froide à travers l'unité de récupération de chaleur en relation d'échange de chaleur avec l'eau recueillie dans la chambre de récupération de chaleur pour préchauffer l'approvisionnement d'eau froide au chauffe-eau, et de fourniture d'une cloison (143 ; 243) séparant la chambre de récupération de chaleur d'un orifice de sortie (123 ; 223) du puisard, et de fourniture à la cloison d'un ou de plusieurs canaux de vidange (143a ; 243a) fournissant un écoulement d'eau limité inférieur à l'écoulement se produisant normalement pendant un fonctionnement de la douche de sorte que la chambre de récupération de chaleur se remplisse d'eaux usées jusqu'au niveau régulé par la cloison pendant un fonctionnement de la douche, et soit vidangée lorsque la douche n'est pas en utilisation, de fourniture d'une sonde de température pour surveiller la température de l'eau dans et/ou hors du chauffe-eau, et de commande d'entrée de chaleur à l'eau froide dans le chauffe-eau pour atteindre et maintenir une température d'eau de sortie sélectionnée sensiblement constante, et de fourniture au receveur de douche, ou à la baignoire, d'un panneau de sol (137 ; 237) pour couvrir le puisard (135 ; 235), et de mise en place de l'unité de récupération de chaleur (121 ; 221) dans la chambre de récupération de chaleur (135a ; 235a) en dessous du panneau de sol, et de fourniture d'un trou de dégagement (147) entre le bord marginal du panneau de sol et la surface environnante du receveur de douche, ou de la baignoire, de sorte que l'eau se vidange dans la chambre de récupération de chaleur.

11. Procédé selon la revendication 10, comportant l'étape de régulation de l'entrée de chaleur à l'eau froide dans le chauffe-eau en ajustant le débit de l'eau froide et/ou en ajustant le réglage de puissance dudit au moins un élément chauffant.

12. Système de douche comprenant une douche électrique (101) et un receveur de douche (117 ; 217), ou une baignoire, selon l'une quelconque des revendications 1 à 9.

13. Système de douche selon la revendication 12, dans lequel la douche est commandée thermostatiquement pour maintenir une température d'eau de sortie sélectionnée sensiblement constante.

14. Système de douche selon la revendication 13, dans lequel la douche comporte un chauffe-eau comportant au moins un élément chauffant électrique pour chauffer l'eau s'écoulant à travers le chauffe-eau depuis l'unité de récupération de chaleur, une sonde de température pour surveiller la température de l'eau dans et/ou hors du chauffe-eau, et un moyen régulant une entrée de chaleur à l'eau froide dans le chauffe-eau pour atteindre et maintenir la température d'eau de sortie sélectionnée sensiblement constante.
